(19) **Europäisches Patentamt / European Patent Office / Office européen des brevets**

(11) **EP 1 826 980 B1**

(12) # EUROPEAN PATENT SPECIFICATION

(45) Date of publication and mention
of the grant of the patent:
**01.07.2009 Bulletin 2009/27**

(51) Int Cl.:
**H04L 29/06** (2006.01)

(21) Application number: **06270028.1**

(22) Date of filing: **28.02.2006**

(54) **Progressive downloading**

Progressives Herunterladen

Téléchargement progressif

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**29.08.2007 Bulletin 2007/35**

(73) Proprietor: **Microsoft Corporation
Redmond WA 98052 (US)**

(72) Inventors:
• **Gkantsidis, Christos
Microsoft Research Ltd
Cambridge CB3 0FB (GB)**
• **Rodriguez, Pablo Rodriguez
Microsoft Research Ltd
Cambridge Cambridgeshire CB3 0FB (GB)**

• **Annapureddy, Siddhartha
Jersey City NJ New Jersey 07306 (US)**
• **Gunawardena, Dinan
J J Thomson Avenue
Cambridge CB3 0FB (GB)**

(74) Representative: **Wallis, Helen Frances Mary et al
Olswang LLP
90 High Holborn
London WC1V 6XX (GB)**

(56) References cited:
**US-A1- 2002 038 375**

• **JIANWEI YIN ET AL: "CoopStreaming: A Novel
Peer-to-Peer System for Fast Live Media
Streaming" LNCS, vol. 3739, 2005, pages 882-887,
XP019021109 Springer-Verlag Berlin Heidelberg**

**Description**

**BACKGROUND**

Content distribution networks have been developed to provide Video on Demand (VoD) to many users. In such systems, the user (or client) is able to start watching the film before they have received the whole file from the distribution server. For true VoD, each user typically requires their own dedicated channel between the distribution server (providing the video file) and the user. However, such solutions are not very scalable as they result in a heavy burden on both network and system (e.g. disk I/O) resources. In order to provide more scalable networks, a number of solutions have been proposed which provide near Video on Demand (nVoD) where the client experiences a delay between requesting the video and playback commencing.

In one example, cable providers transmit a video multiple times on different channels with staggered start times. For example, a cable provider could transmit a 2 hour film simultaneously on 8 different channels, with start times spaced by 15 minutes. A client wishing to view the film would have to wait a maximum of 15 minutes for a transmission of the film to start. Another example involves batching requests by clients received at similar times and providing a single stream to each batch of clients. Here the wait time incurred by a client may vary, dependent on the frequency of other requests received for the same film and the available channels for broadcast. In another example, the film is divided into blocks which are then grouped into groups which increase in length (e.g. in the form of a geometric series or other function). For example a film may be divided into groups of length 1, 2, 4, 8... with the first group (of length 1 block) transmitted repeatedly on a first channel, the second group (of length 2 blocks) transmitted repeatedly on a second channel etc. A client receives the groups on two or more channels simultaneously and buffers the received blocks for playback sequentially. This allows the client to start playing back the film as soon as they have received the first block but can result in large buffer requirements at the client and also complicated control mechanisms to ensure that the client receives blocks on the correct channels (where all channels are not received simultaneously).

In addition to limitations of buffer requirements and server connections, which require considerable investment from the service provider and the client, all the above systems are very inefficient. This is because the film must be transmitted many times by the server to be sure that a client can download the whole film (e.g. 30% efficiency is the upper limit if you wish to download a 2 hour film using the final example given above with a delay of 5 minutes before the start of playback).

The problem of scalability of servers has already been addressed for file distribution by the development of content distribution systems which rely on a fully distributed architecture with nodes in the network participating in the distribution process. Such systems may be referred to as peer-to-peer or peer-assisted content distribution systems. In such a system, the server may divide the file to be distributed into a number of blocks and provide these blocks to nodes in the network. As soon as a node has received one or more blocks, the node can act as a source of the received blocks for other nodes whilst concurrently receiving further blocks until they have received all the blocks of the file. Such systems can operate efficiently and the load on the server is significantly reduced as nodes act as servers for other nodes. However, as blocks of the file are received in a relatively random order, a client must receive all the blocks within a file before they can use that file, i.e. for a media file they must receive the entire file before they can start playback of the file. Consequently these networks are not suitable for transfer of files for VoD or nVoD applications.

To make such content distribution networks suitable for VoD, the clients could download content in sequential order from the server or other nodes in the network. However, this is problematic because it results in nodes having very similar pieces of the file, so there are fewer possibilities for exchanging content between nodes and as a result the efficiency (or throughput) of the network is low. Another solution would be to arrange the nodes in the content distribution network in a topology (e.g. multiple multicast trees) so that blocks can move in an ordered manner through the network and at the same time the resources of the network can be used efficiently. However, such organization of the nodes requires a network controlling node to run complex algorithms and have information on all parts of the network. This is made even more complex by churn in the network (e.g. nodes leaving and joining the network) which necessitates regular changes in the topology.

The invention seeks to provide an improved content distribution system and improved methods for content distribution which enable progressive downloading of files, i.e. downloading where the file can be used by a client (e.g. watched, listened to, played etc) before the entire file has been received at a client.

SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

The present example provides a method of progressively downloading content at a node in a content distribution network, the content being divided into a plurality of segments and each segment comprising a plurality of blocks. The method comprises: connecting the node to one or more neighbour nodes; selecting a segment from the plurality of segments based on a first selection function such that the plurality of segments are downloaded substantially sequentially to the node; selecting a block from the selected segment based on a substantially random selection function; and downloading the selected block from one of the neighbour nodes.

Advantageously, this enables a file to be downloaded and for playback to commence before the entire file has been downloaded whilst also providing small initial latency (between requesting download and start of playback), high playback rates, high network throughput and high levels of utilisation of the network resources. This gives a user a good playback experience with high quality video. The method is independent of the content file type and provides a perfect transfer of the file. The method provides high swarming rates and very high distribution efficiency.

Preferably the method further comprises: determining a delay time based on content information and a download rate; and starting playback of the content after the delay time has elapsed.

Advantageously this ensures a good user experience because once playback has started it can continue uninterrupted until the end of the content file.

Preferably the first selection function provides a small probability of selecting a future segment. Advantageously, this provides easy access to blocks when they are needed by creating additional sources for the blocks whilst minimising the overhead of block propagation from remote locations. This can improve playout rates by 10% or more.

Preferably the method further comprises: determining a playback position of each of the one or more neighbour nodes; selecting a neighbour node from the one or more neighbour nodes for disconnection based on at least one of playback position and connection speed; and disconnecting the selected neighbour node.

Advantageously, this minimises the amount of wasted resources by matching peers that have similar playback positions. Management of peer topology on a local basis provides a very scalable method.

Preferably the method further comprises: determining a usage of a connection between the node and the network; and if the usage falls below a defined threshold, connecting the node to at least one additional neighbour node.

Advantageously, this enables a node to maximise the usage of the node's connection to the network which increases the efficiency of the network.

Preferably the method further comprises: determining a usage of a connection between the node and the network; and if the usage falls below a defined threshold: analysing a characteristic of the at least one neighbour node; analysing a characteristic of at least one other node; and if defined criteria are satisfied, disconnecting a neighbour node and connecting the node to another neighbour node.

Advantageously, this also enables a node to maximise the usage of the node's connection to the network which increases the efficiency of the network. This may be particularly beneficial where there is a limit on, or a fixed number of, neighbour nodes for any node.

Preferably the selected block comprises an encoded block, and the encoded block comprises a linear combination of two or more blocks from the plurality of blocks comprising the selected segment.

Advantageously, use of network coding provides much better playout rates (on average an increase of 20-25% for the same level of buffering). Use of network coding additionally makes the system very robust even when there is a large amount of churn in the nodes participating in the content distribution. Network coding also reduces the probability of rare blocks within a segment and improves overall efficiency significantly.

A second example provides a computer program comprising computer program code means adapted to perform all the steps of any of the preceding methods when said program is run on a computer.

The computer program may be embodied on a computer readable medium.

A third example provides a node in a content distribution network, the content being divided into a plurality of segments and each segment comprising a plurality of neighbouring blocks, the node comprising: a connection arranged to connect the node to one or more neighbour nodes; means for selecting a segment from the plurality of segments based on a first selection function such that the plurality of segments are downloaded substantially sequentially to the node; means for selecting a block from the selected segment based on a substantially random selection function; and means for downloading the selected block from one of the neighbour nodes over the connection.

Preferably the node further comprises: means for determining a delay time based on content information and a download rate; and means for playback of the content after the delay time has elapsed.

Preferably the first selection function provides a small probability of selecting a future segment.

Preferably the node further comprises: means for determining a playback position of each of the one or more neighbour nodes; means for selecting a neighbour node from the one or more neighbour nodes for disconnection based on at least one of playback position and connection speed; and means for disconnecting the selected neighbour node.

Preferably the node further comprises: means for determining a usage of a connection between the node and the network; and means for connecting the node to at least one additional neighbour node if the usage falls below a defined threshold.

Preferably the selected block comprises an encoded block, and wherein the encoded block comprises a linear combination of two or more blocks from the plurality of blocks comprising the selected segment.

A fourth example provides a content distribution network comprising a plurality of nodes as described above.

The method may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

DESCRIPTION OF THE DRAWINGS

The present description will be better understood from the following detailed description read in light of the accompanying drawings, wherein:

FIG. 1 is a schematic diagram of a content distribution system;
FIG. 2 is a schematic diagram of a content file divided into segments and blocks;
FIG. 3 shows an example flow diagram of the operation of a peer;
FIG. 3A shows an example flow diagram for the step of selecting a segment;
FIG. 4 shows a graph of the number of downloaded blocks against time;
FIG. 5 shows a flow diagram for an example of a topology management process;
FIG. 6 shows a schematic diagram of a time line;
FIG. 7 shows a flow diagram for a second example of a topology management process;
FIG. 8 shows a flow diagram for a third example of a topology management process;
FIG. 9 is a schematic diagram showing network coding;
FIG. 10 shows an example flow chart of network coding which happens at a sending peer; and
FIG. 11 shows an example flow chart of the block selection step.

Like reference numerals are used to designate like parts in the accompanying drawings.

DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Although the present examples are described and illustrated herein as being implemented in a peer-assisted distribution system (also known as a peer-to-peer distribution system), the system described is provided as an example and not a limitation. Where examples are described with reference to a particular peer-assisted distribution system (e.g. the system developed by Microsoft (trade mark)), this is by way of example only and the techniques described may be implemented in any other content distribution system. As those skilled in the art will appreciate, the present examples are suitable for application in a variety of different types of content distribution and / or content sharing systems.

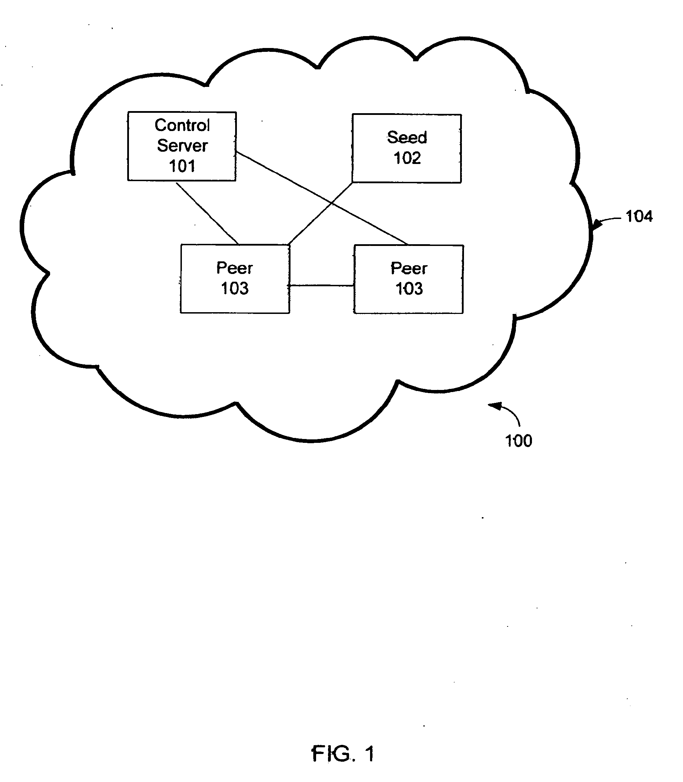

FIG. 1 is a schematic diagram of a content distribution system 100 which comprises a control server 101, a seed 102 and two peers 103. Content distribution occurs within the cloud 104. The content may be any type of data and may be distributed, for example, as uncoded or encoded blocks. The control server 101 (also known as a registrar or a tracker) helps peers 103 find other peers that are participating in the distribution of a particular piece of content. The seed 102 is a client which is usually always on and is where the publisher of the content (not shown in FIG. 1) places a piece of content for subsequent distribution within the system. A seed 102 uploads the content to a small number of peers 103 in the system 100 (this may be to as few as a single peer) but does not download the same content from other nodes in the system. The term 'node' is used herein to refer to any logical entity within the system. A peer 103 is a client which is interested in obtaining the content held by the seed 102. A peer will download the content from nodes (e.g. peers or seeds) in the system and may also upload those parts of the content that it has received to other peers in the system. A peer may act as a temporary or virtual seed once it has received all the particular piece of content, by making the content available for uploading to other peers in the system, whilst no longer downloading the content from peers. The content may be distributed within the cloud in an encoded format or alternatively the content may be not be encoded.

As will be appreciated by the skilled person, the content distribution system 100 shown in FIG. 1 is by way of example only and a content distribution system may comprise a sub-set of the elements shown in FIG. 1 and / or may contain additional elements. Furthermore, the elements shown in FIG. 1 are functional elements and more than one functional element may be combined within a physical network node (e.g. the control server 101 and the seed 102 functionalities). FIG. 1 shows some logical connections between parts of the system 100, however those shown are not exhaustive and are for illustration purposes only.

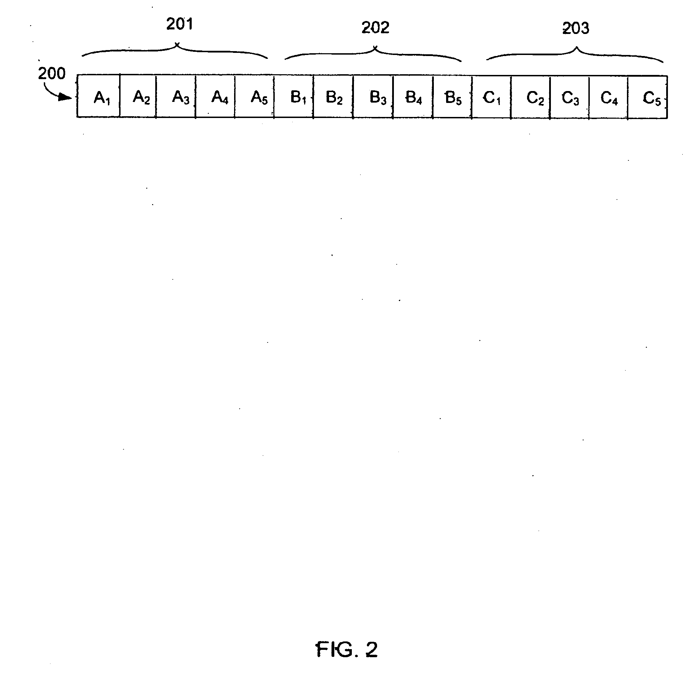

The file to be distributed within the content distribution system 100 is divided into a number of segments, each segment containing a number of blocks, as shown schematically in FIG. 2. FIG. 2 shows a file 200 which is divided into 3 segments 201-203, each comprising 5 blocks. This is by way of example only and typically the number of blocks would be much larger than the number of segments (e.g. 20-30 blocks in a segment or a segment being 100-200 Mbytes with a block being 1-10 Mbytes).

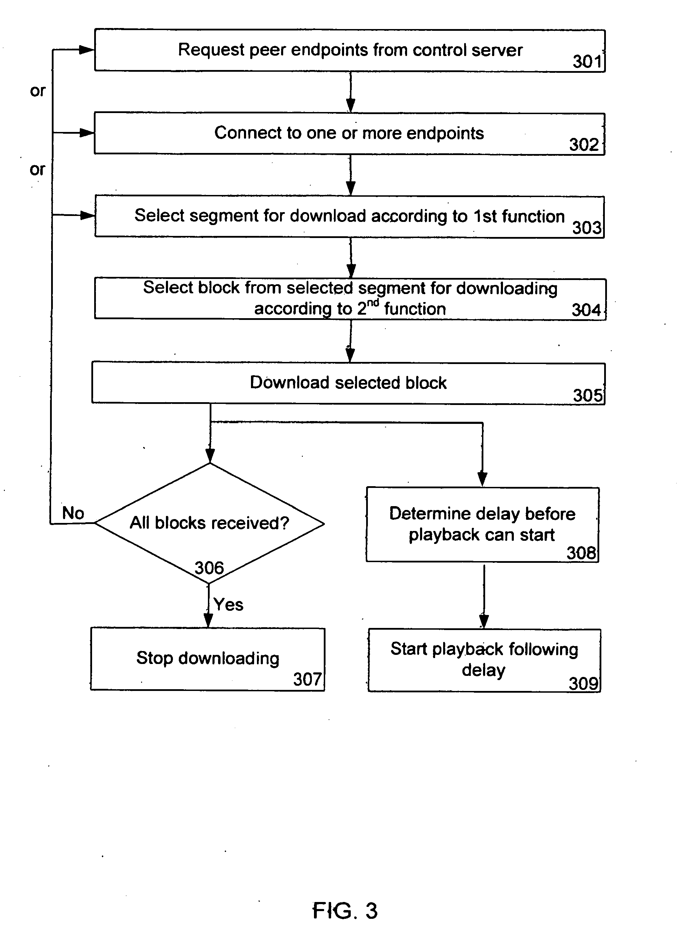

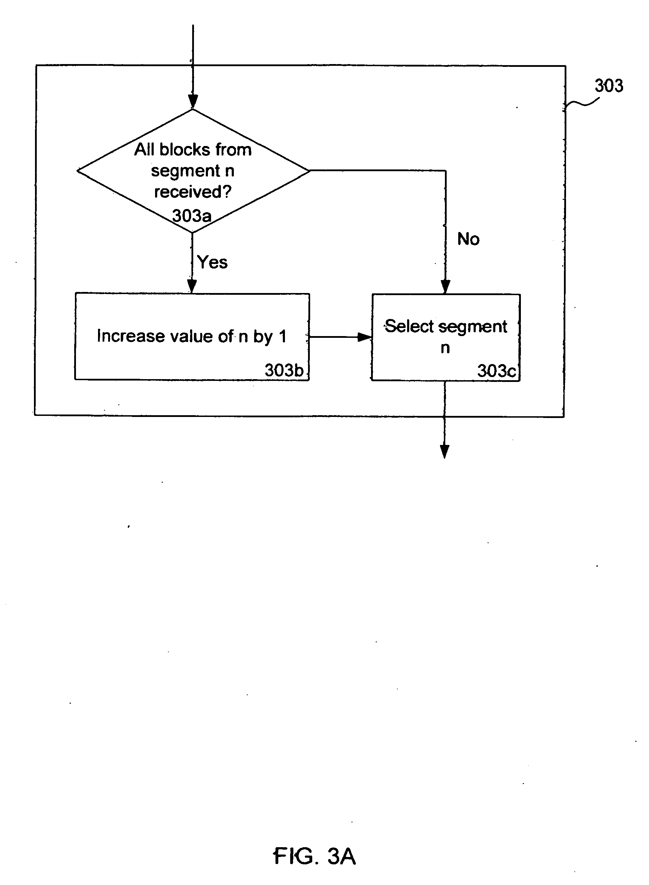

The operation of a peer 103 can be described with reference to FIG. 3. A peer 103 receives information about the content distribution cloud 104 by one of many known methods, for example from a website, URI (Uniform Resource Identifier) or as part of an application experience (e.g. as part of an Interactive Media Player, iMP). If the peer is interested in joining the cloud, they request details of peer endpoints from a control server 101 for that cloud (step 301). These peer endpoints are details of one or more other peers which the peer can connect to in order to download the content. The peer endpoints may also include details of the seed 102, particularly in the early stages of a cloud 104 when there are not many peers within the cloud. The peer then connects to one or more endpoints (step 302) and selects a segment for download according to a first function (step 303) and a block from the selected segment according to a second function (step 304). The first and second functions may be the same or different and these two selecting steps are described in more detail below. The peer then downloads the selected block of the content (step 305). If at this point or subsequently none of the peers identified by the control server (in response to the request in step 301) hold any blocks which are useful to the peer, the peer will ask the control server for additional peer endpoint information (by returning to step 301).

Having received the block (in step 305), the peer checks whether they have received all the blocks from the content (step 306) and if they have not, the peer continues to download further blocks (steps 303-305). Before downloading a further block (steps 303-305), the peer may connect to additional or alternative peers (step 302) and if the peer does not have any additional peer endpoint information, they may first request such additional information from the control server (step 301). Once the peer has downloaded all of the content (all the blocks from all the segments), downloading stops (step 307). The peer may remain within the content distribution cloud 104 acting as a virtual seed or the peer may leave the content distribution cloud. In parallel to downloading, the peer determines when playback can commence (step 308) e.g. the amount of time between the start of downloading and the start of playback, also referred to as the buffer time. This determination may be made after the first block has been downloaded (in step 305) or at any other point. The determination may be made once or may be checked several times. After the required delay (e.g. the buffer time), playback starts (step 309). This therefore enables the peer to playback the content whilst the peer is still downloading later parts of the content. The individual steps are described in more detail below.

When the peer requests peer endpoint information (in step 301) from the control server, the control server may select peer endpoints from a list of active peers in the cloud randomly. In another example, the control server may use particular criteria to select endpoints including geographical location, connection data rate etc. Further examples of selection criteria are described below. In addition to receiving peer endpoint information the peer may also receive additional information, such as information about the content and information to enable to peer to check the validity of the blocks received from other peers (e.g. in the form of a secure content description).

The peer (referred to here as 'peer A') may (in step 302) connect to one or more other peers and these peers are then referred to as its neighbours or neighbour nodes, (i.e. a node to which a connection is made in a single logical 'hop'). Having connected with other peers (as part of step 302 or otherwise), the peers may exchange information on the blocks that they currently hold. This may be at either a pull (e.g. peer A asks peer B what blocks peer B holds) or push of information (e.g. peer B tells peer A what blocks are held at peer B). The information exchange may be one way (e.g. from peer B to peer A) or two way, which enables blocks to be requested and pass in both directions between peers A and B. Once a peer (e.g. peer A) knows what blocks its neighbours holds, it can select one or more blocks from the appropriate segment to download from its neighbours.

The neighbourhood relationship may be symmetric, i.e. if peer B is a neighbour of peer A, then peer A is a neighbour of peer B. It may be beneficial to restrict the exchange of content and control messages to immediate neighbours (plus nodes with special functions such as the control server and seed). This means that each peer only maintains local state information which results in an easily scalable system.

The selection of the segment and / or the block (step 303 and / or step 304) may be made from all the segments / blocks in the content or alternatively from all the segments / blocks which are available for download at neighbouring nodes. The selection of the segment and / or the block (step 303 and / or step 304) may be based on the requirements of the peer making the selection or may be based on the requirements of the peer and its neighbours.

In an example, the segments are selected sequentially (in step 303) such that all the blocks from the first segment are downloaded before any blocks from the second segment are downloaded, as can be described with reference to FIG. 3A. Initially, before any blocks are downloaded, n is set equal to 1 (not shown in FIG. 3A). According to this example of the first function, the peer first checks whether all the blocks from segment n (e.g. the first segment) have been downloaded (step 303a) and if they have not, the same segment, n (e.g. the first segment) is selected (step 303c). If however it is determined (in step 303a) that all the blocks from segment n have been downloaded, then the value of n is increased by one (step 303b, e.g. the value of n is increased from one to two) and the new segment n (e.g. the second segment) is then selected (in step 303c). The block for download from the selected segment may then be selected (in step 304) substantially at random (e.g. second function = substantially random function) from those which are useful (i.e. not already held by peer A) and available (i.e. held by neighbours of peer A). Such a process of sequential segment selection and substantially random block selection achieves significantly higher efficiency than pure sequential download of blocks. Furthermore, the process achieves smaller buffer times before playback can commence.

It will be appreciated that FIG. 3A and the related description provides only one example of a pair of suitable selection functions (i.e. the first and second functions). Further examples of selection functions are described below.

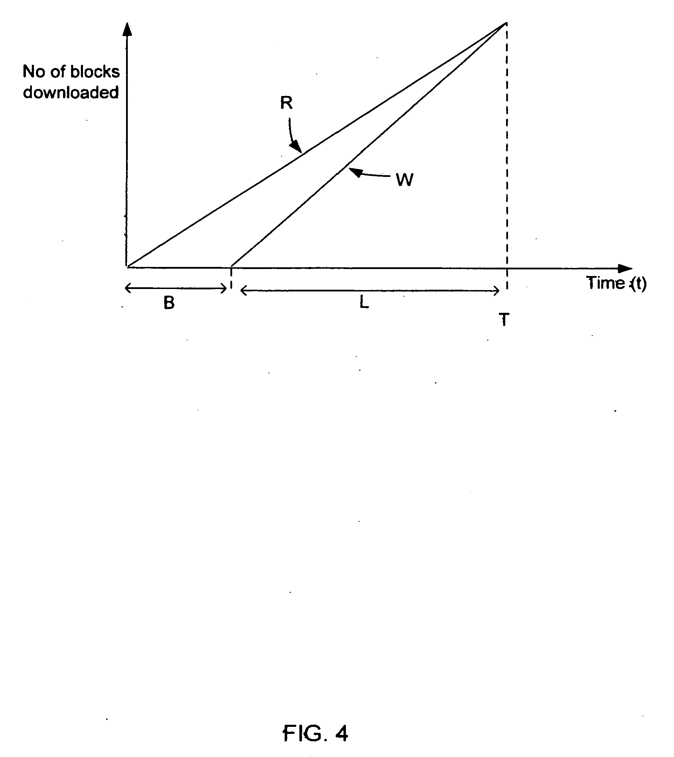

In parallel with downloading (or alternatively before downloading has started), the peer makes a decision regarding whether playback can commence (step 308). Playback should preferably not start (in step 309) unless the peer will be able to play the file uninterrupted from start to finish, otherwise it will result in a poor user experience. An example of a calculation to enable the peer to determine whether playback can start can be explained with reference to FIG. 4, which shows a graph of the number of downloaded blocks against time, where:

R = average rate of download of blocks
W = rate of consumption of blocks on playback
B = buffer time (i.e. time before playback starts)
L = length of playback

At time t=0, the peer has not received any blocks and at this point the peer starts receiving blocks at an average rate R. It will be appreciated that the blocks may not arrive at a fixed rate, and block download may be faster at the start of a segment than at the end of a segment because at the start of the segment there are likely to be more useful blocks held by neighbours (because the peer requires more blocks to complete the segment). At a time t=B, the peer commences playback in which blocks are played at a rate W. In order that the playback is uninterrupted, the peer must have downloaded all the blocks by the time that the last block is played back (at t=T=B+L). The buffer time is therefore given by:

$$B = \frac{L.(W - R)}{R}$$

The values of L and W may be provided by the control server 101, for example the information may be stored within a secure content description provided by the control server in response to the request for endpoint information (step 301, FIG. 3) or at another time.

As discussed above, the rate of arrival of blocks, R, is an average rate. In order to provide a margin for fluctuations in this rate, it may be beneficial to include an extra period of buffer, $\Delta$, such that the total buffer time, including safety margin, B' is given by:

$$B' = B + \Delta = \frac{L.(W - R)}{R} + \Delta$$

where the value of $\Delta$ may be selected and may be, for example, equal to B/10. The size of the buffer required by the peer must be equal to or greater than B'.R.

It may be possible for the user to fast forward or rewind through the content that is being downloaded and played back. The rewind operation and a fast forward operation within the segment being played back (and hence already downloaded in full) may be implemented with minimal delay. Where the fast forward operation goes beyond the segment being played back, the peer may need to recalculate a new buffer time (as described above) and then re-start playback after the new buffer time.

In other examples, one or more techniques may be used to improve the efficiency and performance of the content distribution system and these are described below. A system may be implemented using any number of, and any combination of, the techniques described.

During downloading, topology management may be used to manage which other peers a particular peer is connected to at any time, as described in copending European Patent Application 05270099.4, filed 22 December 2005 and entitled "Connection Management in Peer-to-Peer Content Distribution Clouds". Such processes may be beneficial to avoid problems caused by clusters of peers forming and problems for new peers joining the system. An example topology management process involves peers being required to drop connections when specified conditions are met. For example a peer may be required to have a minimum number of neighbours (e.g. 4) and a maximum number of neighbours (e.g. 6). Initially, a peer may connect to the minimum number of other peers (e.g. 4 other peers, to create 4 neighbours) and then during download, additional peers may connect to the peer such that the number of neighbours increases to the maximum number (e.g. 6). Periodically (or alternatively when the maximum is reached) the peer may be required to drop connections such that they return to having the minimum number of neighbours (e.g. by dropping 2 connections to reduce the number of neighbours to 4). The peer may select the connections for dropping at random or alternatively criteria may be used to determine which connections to drop.

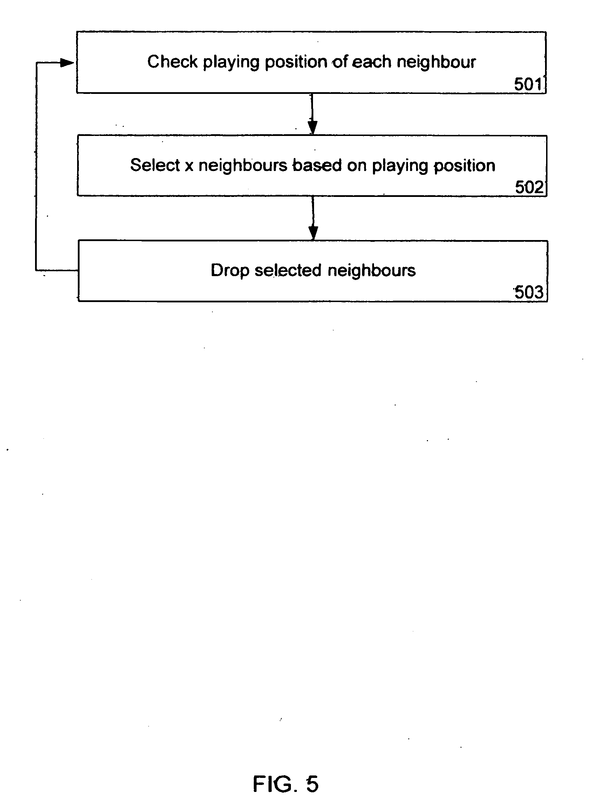

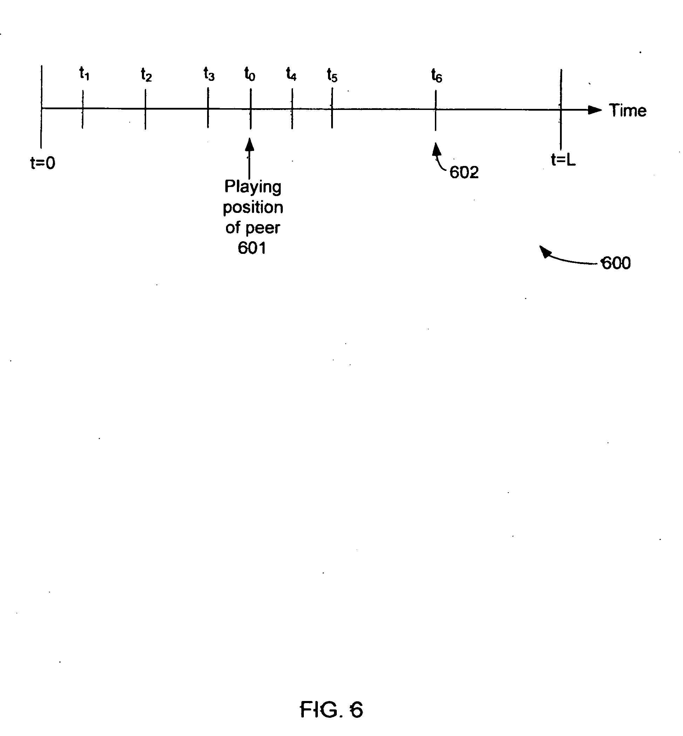

An example of a topology management process is shown in the flow diagram of FIG. 5. A peer periodically checks the playing position of each neighbour (step 501), this check may require information request messages to be sent to all the neighbours, or alternatively, this information may already be shared between neighbours and the information stored at the peer (again this information sharing may comprise a pull or a push). Based on this information, the peer selects x neighbours to drop (step 502) and then drops those selected neighbours (step 503). The value of x may be determined by a topology management process (as described above) or based on any other criteria. The determination may be carried out by the peer, the control server or any other network entity. FIG. 6 shows a schematic diagram of a time line 600 with the playing positions of the peer ($t=t_0$, 601) and each of the neighbours (neighbours 1-6, with playing positions $t=t_1$-$t_6$, 602) marked in relation to the start (t=0) and end (t=L) of the playback. In this example it can be seen that three neighbours (neighbours 1-3, with playing positions $t_1$-$t_3$) are behind the peer in playback and three neighbours (neighbours 4-6, with playing positions $t_4$-$t_6$) are ahead. If the peer selects two neighbours to drop (x=2), the two neighbours which have a playing position which are most different from the playing position of the peer may be selected, e.g. neighbours 1 and 6 (playing positions $t_1$ and $t_6$). Alternatively, the peer may select the two neighbours which have playing positions which are both behind the peer in playback and most different from the playing position of the peer, e.g. neighbours 1 and 2 (playing positions $t_1$ and $t_2$). This second example may be more beneficial because neighbours who are ahead in playing position are more likely to have useful blocks than neighbours which are behind. Furthermore, as all peers may be performing the same topology management process, neighbour 6 (playing position $t_6$) may select the peer in question (playing position $t_0$) to be dropped as its playing position is significantly behind that of neighbour 6. The process of dropping neighbours (steps 501-503) may be repeated periodically or when defined criteria are met. Note that this algorithm is similar to choosing a block from the "rarest-segment" in the local neighbourhood.

In another example, the selection process described above in relation to FIG. 5 may be combined with a random selection element, such that a first number, $x_1$, of neighbours are selected based on playing position and a second number, $x_2$, of neighbours are selected according to other criteria (e.g. randomly, connection speed etc). In the example described above where two neighbours are periodically selected and connections to them dropped, one may be selected based on playing position (e.g. neighbour 1, playing position $t_1$) and one may be selected at random.

In another example, the selection based on playing position (step 502) may in addition (or instead) be based on other factors. For example, the neighbours may also be weighted according to the connection speed of the peer, such that a peer with a divergent playing position and a high connection speed may be less likely to be selected than a peer with a similarly divergent playing position but a lower connection speed.

In the examples described above, decisions on topology management may be made by a peer based on information received about neighbours. In addition to receiving information about neighbours, a peer may receive information from neighbours about other more distant peers within the cloud, for example through the use of gossiping / broadcast protocols in which a peer's playing position is periodically broadcast across the content distribution cloud. This may enable the peer to make decisions based on more information, but requires the peer to store more state information.

The topology management processes described above are distributed processes, in that the peers make their own decisions regarding which connections to drop based on information that they have obtained from neighbours. In another example, a centralised topology management process may be used in which a topology management node in the system (e.g. the control server 101) periodically receives information on playing position from each of the peers 103 in the system (i.e. each of the peers in the cloud 104). This information may, for example, be provided to the control server when a peer re-registers as an active peer within the cloud or may be shared via a gossiping / broadcast protocol as described above. The topology management node can then make global decisions for the whole of the system 100, which may be based on playing position (as described above) and / or other criteria. The decisions may be communicated to peers in the form of a list of neighbours to drop or the decisions may be taken into consideration when peer endpoint information is provided to peers (e.g. in response to the request of step 301 in FIG. 3). Centralised topology management has the benefit that the topology management node (e.g. the control server 101) can make decisions for the benefit of the whole system as they have information on each peer in the system, however, it may require significant processing resources at the node which may limit the other activities that the topology management node can simultaneously perform (e.g. where a control server or seed also performs as a topology management node).

In another example, centralised topology management may occur on a sub-system (or sub-cloud) level, with nodes making decisions for the benefit of sections of the system. For example, where a number of peers are connected using the same network provider (or Internet Service Provider), a topology management node within each network may collect information from each of those peers and then perform centralised topology management within those peers.

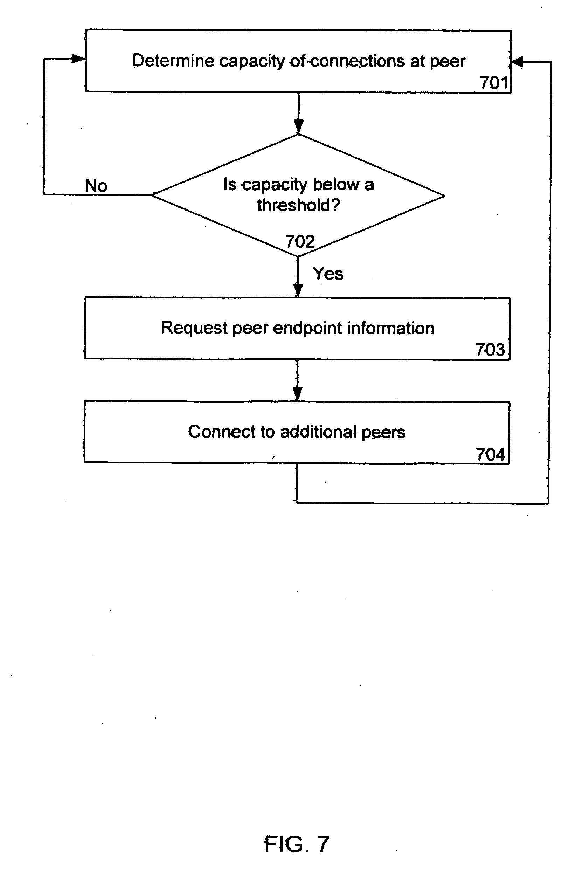

Another example of a topology management process is shown in the flow diagram of FIG. 7, in which a peer periodically determines the capacity of all its connections to its neighbours (step 701). For example, a peer may have a 2 Mbit/s cable modem or ADSL connection whilst its four neighbours use standard telephone modems with a maximum connection speed of 64 kbit/s. Consequently the connections to the neighbours use a maximum of 256 kbit/s, which is only 12.8% of the total available capacity. If the capacity being used (as determined in step 701) falls below a threshold (step 702), the peer requests additional peer endpoint information from the control server (step 703) and connects to one or more additional peers to create additional neighbours (step 704). At this point the peer may re-check the capacity which is being used (steps 701-702) and connect to further peers if required (steps 703-704). If the capacity being used does not fall below the threshold, the peer maintains its existing neighbours. As described above, the process may be repeated periodically by the peer. The peer endpoint information provided by the control server (in response to the request of step 703) may relate to peers which are selected at random by the control server, according to a centralised topology management process (as described above) or based on any other criteria (e.g. geographical location, connection speed, number of existing neighbours etc). This process may involve breaking a rule relating to the maximum number of neighbours that a peer can have. In another example, the maximum number of neighbours (and potentially also the minimum number) may be different for different peers depending on the connection speed of the peer or other criteria. In some examples a hard upper limit may be set for the number of neighbours that a peer can have due to efficiency rules imposed by the protocol used in the network for transferring blocks (e.g. Transport Control Protocol (TCP)).

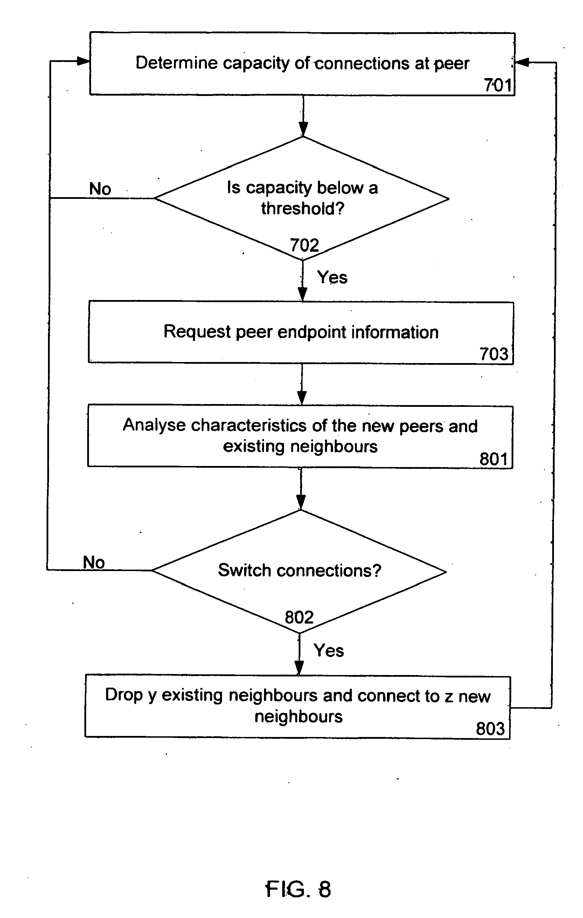

FIG. 8 shows another example of a topology management process which is a variation of that shown in FIG. 7 and in which the peer makes a decision regarding which peers to connect to. As described above, the peer periodically determines the capacity of all its connections to its neighbours (step 701). If the capacity being used (as determined in step 701) falls below a threshold (step 702), the peer requests additional peer endpoint information from the control server (step 703). Having received this additional information, the peer analyses characteristics of the new peers and the existing neighbours (step 801).

Examples of suitable characteristics include, but are not limited to, playing position (as described above in relation to FIGS. 5 and 6) and connection speed. For example, the analysis may be based on both current playing position and connection speed to determine future playing position. This may be particularly beneficial where there is a large spread in connection speed, because a peer with a high connection speed which is significantly behind in current playing position, may have a much closer playing position in the near future than a peer with a lower connection speed that is currently closer in playing position. Based on this analysis, the peer determines (in step 802) whether it would be beneficial (e.g. more efficient) to switch existing connections and if so, the peer drops a first number, y, of connections (therefore dropping y existing neighbours) and connects to a second number, z, of new peers to create z new neighbours. The values of y and z may be the same or different and the values may be selected to maintain the number of neighbours within a specified range (e.g. 4 to 6) or according to specified rules.

Although in the examples of FIGS. 7 and 8, the peer makes decisions regarding which peers to connect to, the control server may also use a centralised topology management process to select endpoint information for provision to the peer (in response to the request in step 703). This combined use of both centralised and distributed topology management processes may enable the peers to optimise their neighbours more quickly than using just centralised management or just decisions taken locally at the peer.

In the examples described above in relation to FIGS. 7 and 8, it may not be necessary for a peer to request additional endpoint information (step 703) if the peer already has endpoint information for peers which are not currently neighbours (for example, as received in response to the request in step 301, FIG. 3).

The topology management processes described above may, in addition to (or instead of) being used during downloading, be used to determine which peers a peer initially connects to (in step 302, FIG. 3). If the endpoint information for the seed 102 is provided by the control server 101 at any stage, and if a topology management process is used which involves playing position, the playing position of the seed is deemed to be the end of the playback (t=L, in the example of FIG. 7) because the seed has the entire content file.

In the above description, the references to connection speed and connection capacity relates to the upload (i.e. donor) capacity and upload speed of the peer and the download (i.e. recipient) capacity and download speed of its neighbours. In other examples, the download capacity and download speed of the peer and the upload capacity and upload speed of its neighbours may be used, or some combination of the upload and download values may be used.

As described above, any number of, and any combination of, the topology management processes described above may be implemented in a content distribution network.

As described above, the selection of the segment and / or the block (step 303 and / or step 304) may be made based on the requirements of only the peer making the selection or based on the requirements of the peer and its neighbours. In the example described above with relation to FIGS. 3 and 3A, the segments are selected sequentially and the blocks for download are selected substantially at random from the selected segment and from those which are useful and available. In this example, the selection is based on the requirements of the peer making the selection and not on the requirements of its neighbours.

It may however be beneficial to all peers in the system for the selection to be based on the requirements of the whole neighbourhood. If one or more blocks from a segment are particularly rare in a neighbourhood or in the whole system, it will be harder for all the peers to obtain this block as there will be few peers from whom they will be able to obtain the block and there may be many peers competing to connect to those peers holding the block. In order to alleviate this, a block selection function (the second function, step 304) may be chosen to select a local rarest block, e.g. a block which is most rare within the neighbourhood. Downloading such a block results in there being more peers within the neighbourhood holding the rare block and it is consequently less rare and will propagate to peers more easily. Use of sequential selection of segments and local rarest selection of blocks from the selected segment, as described above, improves the scheduling of blocks and the blocks flow more efficiently amongst the peers in the system. In another example, the block which is the rarest within the whole system could be selected, however this would require the peer to have information on the whole system and not just local (neighbourhood) state information.

In the example described above with relation to FIGS. 3 and 3A, the segments are selected sequentially (steps 303a-303c) but the blocks for download may be selected substantially at random (step 304) from those which are useful and available. However, such sequential selection of segments (as shown in FIG. 3A) can result in a delay in receiving blocks when a peer moves between segments (e.g. between downloading the first and the second segments). This is because the blocks from the next segment are likely to be quite rare in the peer's neighbourhood and potentially also in the wider system. To alleviate this, a technique referred to as 'pre-fetching' may be used in which peers download blocks from future segments with a small probability. Even though these blocks are not of immediate use to the peer (i.e. they do not belong to the segment which is required next for playback), these blocks have a beneficial effect on the local neighbourhood and the overall system. Pre-fetching provides easy access to blocks of subsequent segments when they are needed by providing additional sources for the blocks in the system, thus minimising the overhead of block propagation from remote locations. Any suitable probability function may be used as the first function (in step 303) to select the segment to be downloaded which provides a small probability of selection of a future segment, i.e. if segment n is the current segment being downloaded, the probability of selecting segment f, where f>n, is small (but non-zero), e.g. a decaying function. As shown in the examples below, the future segment, f, may be selected at random, according to the probability function (as in the first example), according to certain criteria, e.g. the properties of the segment (as in the fourth example) or by any other method.

In a first pre-fetching example, where n is the segment that the peer is currently downloading (or is about to start downloading if any previous segment has been fully downloaded), the segment selection function (the first function) may be defined such that:

$$P(n) = 0.9$$

$$P(n+1) = 0.1$$

Consequently, there is a 90% chance of the current segment being selected and a 10% chance of the next segment being selected. Having selected the segment (step 303), a block may be selected substantially at random from the selected segment (step 304, second function = substantially random function). In other examples, the first function may be an exponential function or a binomial function.

In a second pre-fetching example, the block selection function (the first function) described above, where there is a 90% chance of the current segment being selected and a 10% chance of the next segment being selected may be combined with a block selection function (the second function) which selects the locally rarest block, as described above.

In a third pre-fetching example, different block selection functions may be used depending on the segment selected. For example if the current segment is selected (in step 303) then a substantially random block selection function is used (in step 304) and if the next segment is selected (in step 303), a different function (e.g. a local rarest selection function) is used to select a block from the selected segment (in step 304).

In a fourth pre-fetching example, a probability function may be used to determine whether a current segment (or next segment, if all previous segments have been fully downloaded) is selected (as described above) and in the occurrences where a current segment is not selected, the least represented segment in the neighbourhood may be selected. This least represented segment may also be referred to as the rarest segment in the neighbourhood. For example:

$$P(n) = 0.9$$

$$P(\text{"least represented segment in neighbourhood"}) = 0.1$$

This selection, with a small probability, of the rarest segment in a neighbourhood offers similar benefits to the selection of a rarest block, as described above. The selection results in additional sources of a rare segment within the neighbourhood, therefore making it less rare.

The pre-fetching examples described above all relate to distributed decision making with each peer making decisions about pre-fetching based on their local state information. However, in addition or instead, some centralised pre-fetching may be implemented where a peer connects to the seed. Where the seed has information on all the peers within the system (obtained directly from peers or from the control server), the seed may decide which block to provide to a peer, e.g. the system wide rarest block within the selected segment or the earliest possible system wide rarest block. The seed may obtain information on the peer's neighbourhood from the peer and then provide the peer with the rarest block in the peer's neighbourhood. The seed may use other information (e.g. playing positions) to determine which block to provide to any peers connected to it.

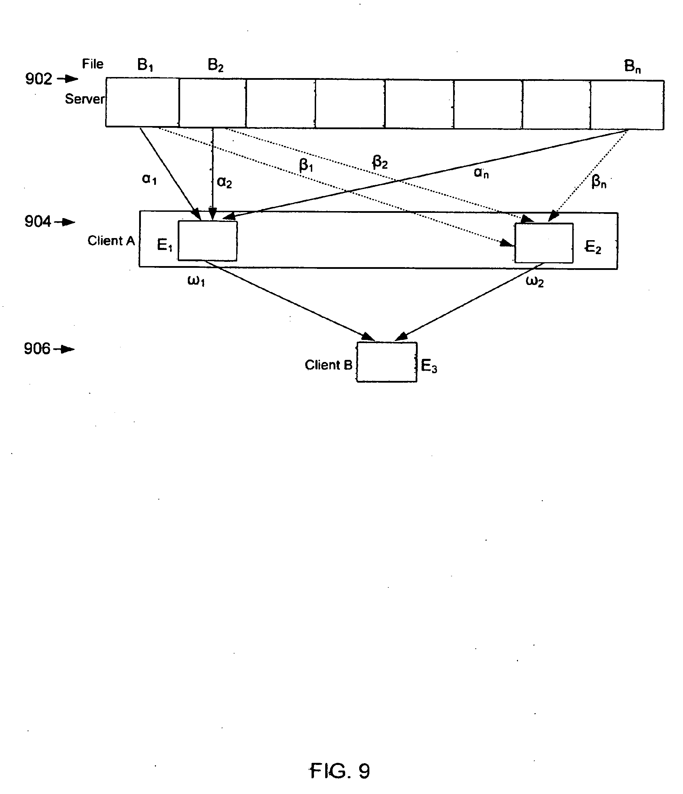

In order to alleviate problems of rare blocks within the system or a neighbourhood, network coding may be applied. Network coding has been applied in content distribution systems used for file transfer (as opposed to for progressive downloading). In network coding each peer in the system generates and transmits encoded blocks of information, these newly encoded blocks being a linear combination of all the blocks currently held by the particular peer. This compares to other systems where the blocks are transmitted uncoded or alternatively encoding of the blocks only occurs at the server. The principles of network coding can be described with reference to FIG. 9, which shows the flow of blocks between a server 902 and two clients (or nodes), client A 904 and client B 906. Initially all the blocks, $B_1$-$B_n$, are held only by the server and not by any nodes. When client A contacts the server to get a block, the server produces an encoded block $E_1$ which is a linear combination of all the blocks in the file, such that:

$$E_1 = \alpha_1 B_1 + \alpha_2 B_2 + \ldots\ldots + \alpha_n B_n$$

where $\alpha_i$ are random coefficients. In order that the block size does not increase in size, these operations take place within a finite field, typically $GF(2^{16})$. The server then transmits to client A both the newly encoded block $E_1$ and the coefficient vector ($\alpha_i$). Client A may also receive a second encoded block $E_2$ from the server, created using a second set of random coefficients $\beta i$. When client A needs to transmit a block to client B, client A creates a third encoded block, $E_3$ from a linear combination of $E_1$ and $E_2$ using random coefficients $\omega_i$.

When network coding is used as described above, a client can recover the original file after receiving n blocks that are linearly independent from each other, in a process similar to solving a set of linear equations. If the coefficients are chosen at random by each client, a client will be unlikely to receive a block which is not of use to that client. However, to further check this, clients may transmit the coefficient vector to a receiving client (client B in the example of FIG. 9) in advance of the block itself. The receiving client can then check whether the resultant block would provide it with any new information and only request the downloading of the block if it will be of use to the receiving client. However, network coding as described above is not suitable for implementation in a system for progressive downloading because it requires the peer to download the entire file before they can decode the blocks, recover the original file and commence playback.

Instead of applying network coding over the whole file, network coding may be applied within each segment, such that newly encoded blocks comprise linear combinations of blocks from a single segment. This limits the benefits of network coding, since an encoded block is only useful to other peers interested in the particular segment, but means that a peer only needs to wait until they have downloaded sufficient blocks from a segment before it can start decoding. Such use of network coding significantly improves the probability of a peer finding useful blocks for any given segment and the same encoded block can be used by multiple peers missing different blocks in the same segment.

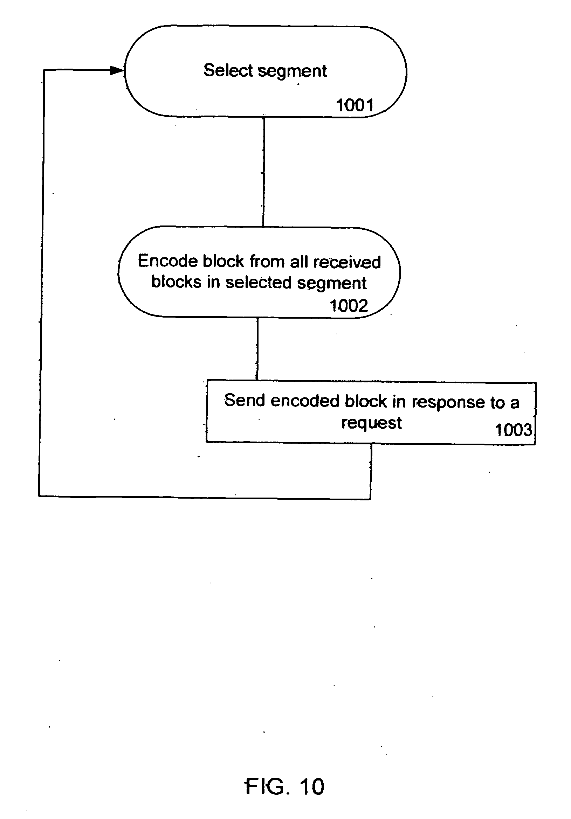

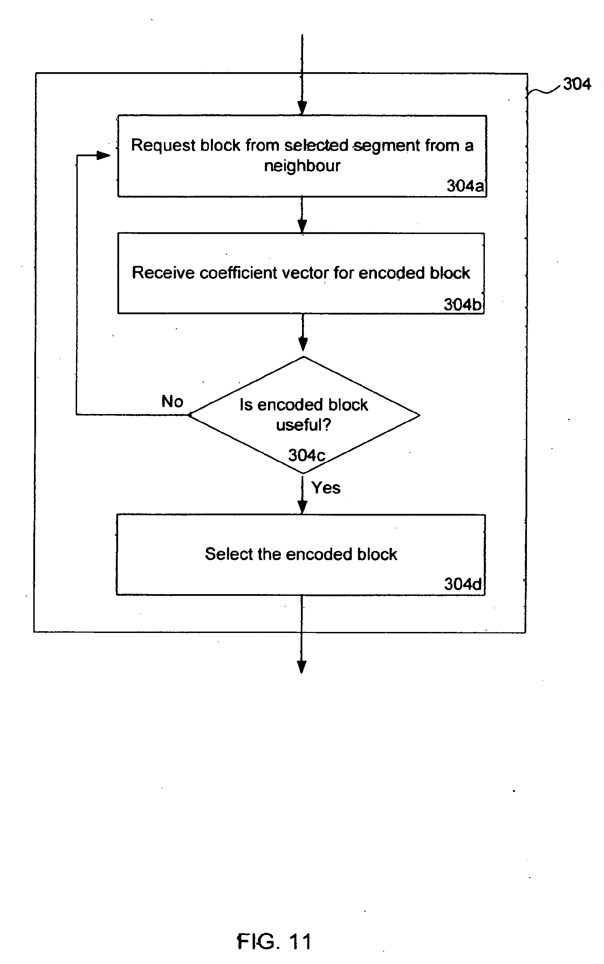

Use of network coding in a content distribution system for progressive downloading can be described with reference to FIGS. 10 and 11. FIG. 10 shows an example flow chart of network coding which happens at a sending peer (i.e. a peer which is uploading blocks to a neighbour). The peer selects a segment (step 1001), encodes a newly encoded block from a linear combination of some / all the blocks held by that peer from the selected segment (step 1002) and then, in response to a request from a neighbour, the peer sends the newly encoded block to the neighbour (step 1003). FIG. 11 shows an example flow chart of the block selection step (step 304 from FIG. 3) which uses network coding. The peer requests a block from the selected segment (selected in step 303) from a neighbour (step 304a). In response the peer may be provided with the coefficient vector for an encoded block (step 304b), from which the peer can determine whether the encoded block will be useful (step 304c). If the block is not useful, a further block may be requested from the same or a different peer (step 304a). If the block is useful to the peer, the encoded block is selected (step 304d) and subsequently downloaded (step 305 from FIG. 3). In another example, in response to the request for a block (step 304a), the peer may be provided with the block (step 305) and may subsequently decide whether it is useful and discard it if it is not useful.

Network coding on a segment by segment basis is one example of a suitable encoding scheme which may be used for progressive downloading. Other suitable encoding schemes where sub-matrices can be decoded independently may be used instead.

Using the techniques described above, it is possible to create a content distribution system for progressive downloading of a content file with a small start-up latency (e.g. less than 10% of the duration of the content) and which supports playback rates which are comparable to the access capacities of the users (up to 80-90%). Playback rate may be used as a metric to compare performance of systems and methods, with the objective to provide the maximum possible content playback rate with a reasonable initial buffer.

The term 'playback' is used herein to refer to any use of the file and is not limited to media files which are played.

Although progressive downloading is most beneficial for media files (e.g. video or audio files), the techniques described above may be applied to any content file as the techniques are entirely independent of the data format used.

In the description above, a control server is used to find other peers within a content distribution cloud. However, other techniques may be used which enable a peer to find random subsets of nodes without the need for a control server.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

The steps of the methods described herein may be carried out in any suitable order, or simultaneously where appropriate.

It will be understood that the above description of a preferred embodiment is given by way of example only and that various modifications may be made by those skilled in the art.

**Claims**

1. A method of progressively downloading content (200) at a node (102, 103) in a content distribution network (100), the content (200) being divided into a plurality of segments (201, 202, 203) and each segment comprising a plurality of blocks ($A_1$, $A_2$ ...AN) , the method comprising:

   connecting the node (102, 103) to one or more neighbour nodes (102, 103);
   selecting a segment (201) from the plurality of segments (201, 202, 203) based on a first selection function such that the plurality of segments (201, 202, 203) are downloaded substantially sequentially to the node (102, 103);
   selecting a block ($A_1$) from the selected segment (201) based on a substantially random selection function; and
   downloading the selected block ($A_1$) from one of the neighbour nodes (102, 103).

**2.** A method according to claim 1, further comprising:

determining a delay time based on content information and a download rate; and
starting playback of the content (200) after the delay time has elapsed.

**3.** A method according to claim 1 or 2, wherein the first selection function provides a small probability of selecting a future segment.

**4.** A method according to any of the preceding claims further comprising:

determining a playback position of each of the one or more neighbour nodes (102, 103);
selecting a neighbour node (102, 103) from the one or more neighbour nodes (102, 103) for disconnection based on at least one of playback position and connection speed; and
disconnecting the selected neighbour node (102, 103).

**5.** A method according to any of the preceding claims further comprising:

determining a usage of a connection between the node (102, 103) and the network (100); and
if the usage falls below a defined threshold, connecting the node (102, 103) to at least one additional neighbour node (102, 103).

**6.** A method according to any of the preceding claims further comprising:

determining a usage of a connection between the node (102, 103) and the network (100); and
if the usage falls below a defined threshold:

analysing a characteristic of the at least one neighbour node (102, 103); analysing a characteristic of at least one other node (102, 103); and
if defined criteria are satisfied, disconnecting a neighbour node (102, 103) and connecting the node (102, 103) to another neighbour node (102, 103).

**7.** A method according to any of the preceding claims, wherein the selected block comprises an encoded block, and wherein the encoded block comprises a linear combination of two or more blocks from the plurality of blocks comprising the selected segment.

**8.** A computer program comprising computer program code means adapted to perform all the steps of any of the preceding claims when said program is run on a computer.

**9.** A computer program as claimed in claim 8 embodied on a computer readable medium.

**10.** A node for use in a content distribution network (100), the content (200) being divided into a plurality of segments (201, 202, 203) and each segment (201) comprising a plurality of blocks ($A_1$, $A_2$ ...AN), the node (102, 103) comprising:

a connection arranged to connect the node (102, 103) to one or more neighbour nodes (102, 103);
means for selecting a segment (201) from the plurality of segments (201, 202, 203) based on a first selection function such that the plurality of segments (201, 202, 203) are downloaded substantially sequentially to the node (102, 103); means for selecting a block from the selected segment (201) based on a substantially random selection function; and
means for downloading the selected block ($A_1$) from one of the neighbour nodes (102, 103) over the connection.

**11.** A node according to claim 10, further comprising:

means for determining a delay time based on content information and a download rate; and
means for playback of the content (200) after the delay time has elapsed.

**12.** A node according to claim 10 or 11, wherein the first selection function provides a small probability of selecting a future segment.

**13.** A node according to any of claims 10-12 further comprising:

Means for determining a playback position of each of the one or more neighbour nodes (102, 103);
Means for selecting a neighbour node (102, 103) from the one or more neighbour nodes (102, 103) for disconnection based on at least one of playback position and connection speed; and
Means for disconnecting the selected neighbour node (102, 103).

**14.** A node according to any of claims 10-13 further comprising:

Means for determining a usage of a connection between the node (102, 103) and the network (100); and
means for connecting the node (102, 103) to at least one additional neighbour node (102, 103) if the usage falls below a defined threshold.

**15.** A node according to any of claims 10-14, wherein the selected block comprises an encoded block, and wherein the encoded block comprises a linear combination of two or more blocks from the plurality of blocks (A, A..A, B, B..B, C, C..C) comprising the selected segment.

**16.** A content distribution network comprising a plurality of nodes (102, 103) as claimed in any of claims 10-15.

**Patentansprüche**

**1.** Verfahren zum progressiven Herunterladen von Inhalt (200) an einem Knoten (102, 103) in einem Inhaltverteilnetz (100), wobei der Inhalt (200) in eine Vielzahl von Segmenten (201, 202, 203) unterteilt ist und jedes Segment eine Vielzahl von Blöcken ($A_1$, $A_2$ ... AN) aufweist, wobei das Verfahren umfasst:

Verbinden des Knotens (102, 103) mit einem oder mehreren Nachbarknoten (102, 103);
Auswählen eines Segments (201) aus der Vielzahl von Segmenten (201, 202, 203) auf der Grundlage einer ersten Auswahlfunktion, so dass die Vielzahl von Segmenten (201, 202, 203) im wesentlichen sequentiell zum Knoten (102, 103) heruntergeladen werden;
Auswählen eines Blocks ($A_1$) aus dem ausgewählten Segment (201) auf der Grundlage einer im wesentlichen zufälligen Auswahlfunktion; und
Herunterladen des ausgewählten Blocks ($A_1$) von einem der Nachbarknoten (102, 103).

**2.** Verfahren nach Anspruch 1, ferner umfassend:

Bestimmen einer Verzögerungszeit auf der Grundlage von Inhaltsinformation und einer Herunterladerate; und
Starten der Wiedergabe des Inhalts (200), nachdem die Verzögerungszeit verstrichen ist.

**3.** Verfahren nach Anspruch 1 oder 2, **dadurch gekennzeichnet, dass** die erste Auswahlfunktion eine geringe Wahrscheinlichkeit des Auswählens eines zukünftigen Segments liefert.

**4.** Verfahren nach einem der vorangehenden Ansprüche, ferner umfassend:

Bestimmen einer Wiedergabeposition von jedem des einen oder der mehreren Nachbarknoten (102, 103);
Auswählen eines Nachbarknotens (102, 103) aus dem einen oder den mehreren Nachbarknoten (102, 103) zum Trennen auf der Grundlage von Wiedergabeposition und/oder Verbindungsgeschwindigkeit; und
Trennen des ausgewählten Nachbarknotens (102, 103).

**5.** Verfahren nach einem der vorangehenden Ansprüche, ferner umfassend:

Bestimmen einer Nutzung einer Verbindung zwischen dem Knoten (102, 103) und dem Netz (100); und,
wenn die Nutzung unter einen definierten Schwellenwert fällt, Verbinden des Knotens (102, 103) mit mindestens einem zusätzlichen Nachbarknoten (102, 103).

**6.** Verfahren nach einem der vorangehenden Ansprüche, ferner umfassend:

Bestimmen einer Nutzung einer Verbindung zwischen dem Knoten (102, 103) und dem Netz (100); und,

wenn die Nutzung unter einen definierten Schwellenwert fällt:

Analysieren einer Charakteristik des mindestens einen Nachbarknotens (102, 103);
Analysieren einer Charakteristik mindestens eines weiteren Knotens (102, 103); und,
wenn definierte Kriterien erfüllt sind, Trennen eines Nachbarknotens (102, 103) und Verbinden des Knotens (102, 103) mit einem anderen Nachbarknoten (102, 103).

7. Verfahren nach einem der vorangehenden Ansprüche, **dadurch gekennzeichnet, dass** der ausgewählte Block einen kodierten Block aufweist und dass der kodierte Block eine lineare Kombination von zwei oder mehr Blöcken aus der Vielzahl von Blöcken mit dem ausgewählten Segment aufweist.

8. Computerprogramm mit Computerprogrammcodemitteln, die zur Durchführung aller Schritte von einem der vorangehenden Ansprüche bei Ausführen des Programms auf einem Computer gestaltet sind.

9. Computerprogramm nach Anspruch 8, das auf einem Computer lesbaren Medium verkörpert ist.

10. Knoten zur Verwendung in einem Inhaltverteilnetz (100), wobei der Inhalt (200) in eine Vielzahl von Segmenten (201, 202, 203) unterteilt ist und jedes Segment (201) eine Vielzahl von Blöcken ($A_1$, $A_2$ ... AN) aufweist, wobei der Knoten (102, 103) aufweist:

eine Verbindung zum Verbinden des Knotens (102, 103) mit einem oder mehreren Nachbarknoten (102, 103);
ein Mittel zum Auswählen eines Segments (201) aus der Vielzahl von Segmenten (201, 202, 203) auf der Grundlage einer ersten Auswahlfunktion, so dass die Vielzahl von Segmenten (201, 202, 203) im wesentlichen sequentiell zum Knoten (102, 103) heruntergeladen wird;
ein Mittel zum Auswählen eines Blocks aus dem ausgewählten Segment (201) auf der Grundlage einer im wesentlichen zufälligen Auswahlfunktion; und
ein Mittel zum Herunterladen des ausgewählten Blocks ($A_1$) von einem der Nachbarknoten (102, 103) über die Verbindung.

11. Knoten nach Anspruch 10, ferner umfassend:

ein Mittel zum Bestimmen einer Verzögerungszeit auf der Grundlage von Inhaltsinformation und einer Herunterladerate; und
ein Mittel zur Wiedergabe des Inhalts (200), nachdem die Verzögerungszeit verstrichen ist.

12. Knoten nach Anspruch 10 oder 11, **dadurch gekennzeichnet, dass** die erste Auswahlfunktion eine geringe Wahrscheinlichkeit des Auswählen eines zukünftigen Segments liefert.

13. Knoten nach einem der Ansprüche 10 - 12, ferner umfassend:

ein Mittel zum Bestimmen einer Wiedergabeposition von jedem des einen oder der mehreren Nachbarknoten (102, 103);
ein Mittel zum Auswählen eines Nachbarknotens (102, 103) aus dem einen oder den mehreren Nachbarknoten (102, 103) zum Trennen auf der Grundlage von Wiedergabeposition und/oder Verbindungsgeschwindigkeit; und
ein Mittel zum Trennen des ausgewählten Nachbarknotens (102, 103).

14. Knoten nach einem der Ansprüche 10 - 13, ferner umfassend:

ein Mittel zum Bestimmen einer Nutzung einer Verbindung zwischen dem Knoten (102, 103) und dem Netz (100); und
ein Mittel zum Verbinden des Knotens (102, 103) mit mindestens einem zusätzlichen Nachbarknoten (102, 103), wenn die Nutzung unter einen definierten Schwellenwert fällt.

15. Knoten nach einem der Ansprüche 10 - 14, **dadurch gekennzeichnet, dass** der ausgewählte Block einen kodierten Block aufweist und dass der kodierte Block eine lineare Kombination von zwei oder mehr Blöcken aus der Vielzahl von Blöcken (A, A..A, B, B..B, C, C..C) mit dem ausgewählten Segment aufweist.

16. Inhaltverteilnetz mit einer Vielzahl von Knoten (102, 103) nach einem der Ansprüche 10 - 15.

**Revendications**

1. Procédé de téléchargement progressif d'un contenu (200) vers un noeud (102, 103) d'un réseau de distribution de contenu (100), le contenu (200) étant subdivisé en une pluralité de segments (201, 202, 203) et chaque segment comprenant une pluralité de blocs ($A_1$, $A_2$ ... $A_N$), le procédé comprenant les étapes consistant à :

   - connecter le noeud (102, 103) à un ou plusieurs noeuds voisins (102, 103) ;
   - sélectionner un segment (201) parmi la pluralité de segments (201, 202, 203) en se fondant sur une première fonction de sélection, de sorte que la pluralité de segments (201, 202, 203) soit téléchargée sensiblement séquentiellement au noeud (102, 103) ;
   - sélectionner un bloc ($A_1$) provenant du segment sélectionné (201) en se fondant sur une fonction de sélection sensiblement aléatoire ; et
   - télécharger le bloc sélectionné ($A_1$) depuis un des noeuds voisins (102, 103).

2. Procédé selon la revendication 1, comprenant, en outre, les étapes consistant à :

   - déterminer un temps de retard en se fondant sur des informations du contenu et un débit de téléchargement ; et
   - commencer la reproduction du contenu (200) après que le temps de retard se soit écoulé.

3. Procédé selon la revendication 1 ou 2, pour lequel la première fonction de sélection procure une petite probabilité de sélectionner un segment futur.

4. Procédé selon l'une quelconque des revendications précédentes, comprenant, en outre, les étapes consistant à :

   - déterminer une position de reproduction de chacun des un ou plusieurs noeuds voisins (102, 103) ;
   - sélectionner un noeud voisin (102, 103) parmi les un ou plusieurs noeuds voisins (102, 103) pour une déconnexion en se fondant sur au moins un critère parmi la position de reproduction et la vitesse de connexion ; et
   - déconnecter le noeud voisin (102, 103) sélectionné.

5. Procédé selon l'une quelconque des revendications précédentes, comprenant, en outre, les étapes consistant à :

   - déterminer un taux d'utilisation d'une connexion entre le noeud (102, 103) et le réseau (100) ; et
   - si ce taux d'utilisation chute au-dessous d'un seuil défini, connecter le noeud (102, 103) à au moins un noeud voisin (102, 103) additionnel.

6. Procédé selon l'une quelconque des revendications précédentes, comprenant, en outre, les étapes consistant à :

   - déterminer un taux d'utilisation d'une connexion entre le noeud (102, 103) et le réseau (100) ; et
   - si ce taux d'utilisation chute au-dessous d'un seuil défini :
   - analyser une caractéristique des au moins un noeuds voisins (102, 103) ;
   - analyser une caractéristique d'au moins un autre noeud (102, 103) ; et
   - si des critères définis sont satisfaits, déconnecter un noeud voisin (102, 103) et connecter le noeud (102, 103) à un autre noeud voisin (102, 103).

7. Procédé selon l'une quelconque des revendications précédentes, pour lequel le bloc sélectionné comprend un bloc codé, et pour lequel le bloc codé comprend une combinaison linéaire de deux ou davantage de blocs parmi la pluralité de blocs constituant le segment sélectionné.

8. Programme informatique comprenant des moyens de codage de programme informatique adaptés pour effectuer toutes les étapes de l'une quelconque des revendications précédentes lorsque ledit programme est exécuté sur un ordinateur.

9. Programme informatique selon la revendication 8, incorporé dans un support lisible par un ordinateur.

10. Noeud destiné à être utilisé dans un réseau de distribution de contenu (100), le contenu (200) étant subdivisé en une pluralité de segments (201, 202, 203) et chaque segment (201) comprenant une pluralité de blocs ($A_1$, $A_2$ ... $A_N$), le noeud (102, 103) comprenant :

- une connexion agencée pour connecter le noeud (102, 103) à un ou plusieurs noeuds voisins (102, 103) ;
- des moyens pour sélectionner un segment (201) parmi la pluralité de segments (201, 202, 203) en se fondant sur une première fonction de sélection, de sorte que la pluralité de segments (201, 202, 203) soit téléchargée sensiblement séquentiellement au noeud (102, 103) ;
- des moyens pour sélectionner un bloc provenant du segment sélectionné (201) en se fondant sur une fonction de sélection sensiblement aléatoire ; et
- des moyens pour télécharger le bloc sélectionné ($A_1$) depuis un des noeuds voisins (102, 103) par la connexion.

**11.** Noeud selon la revendication 10, comprenant en outre :

- des moyens pour déterminer un temps de retard en se fondant sur des informations du contenu et un débit de téléchargement ; et
- des moyens pour effectuer la reproduction du contenu (200) après que le temps de retard se soit écoulé.

**12.** Noeud selon la revendication 10 ou 11, pour lequel la première fonction de sélection procure une petite probabilité de sélectionner un segment futur.

**13.** Noeud selon l'une quelconque des revendications 10 à 12, comprenant en outre :

- des moyens pour déterminer une position de reproduction de chacun des un ou plusieurs noeuds voisins (102, 103) ;
- des moyens pour sélectionner un noeud voisin (102, 103) parmi les un ou plusieurs noeuds voisins (102, 103) pour une déconnexion en se fondant sur au moins un critère parmi la position de reproduction et la vitesse de connexion ; et
- des moyens pour déconnecter le noeud voisin (102, 103) sélectionné.

**14.** Noeud selon l'une quelconque des revendications 10 à 13, comprenant en outre :

- des moyens pour déterminer un taux d'utilisation d'une connexion entre le noeud (102, 103) et le réseau (100) ; et
- des moyens pour connecter le noeud (102, 103) à au moins un noeud voisin (102, 103) additionnel si ce taux d'utilisation chute au-dessous d'un seuil défini.

**15.** Noeud selon l'une quelconque des revendications 10 à 14, pour lequel le bloc sélectionné comprend un bloc codé, et pour lequel le bloc codé comprend une combinaison linéaire de deux ou davantage de blocs parmi la pluralité de blocs (A, A ... A, B, B ... B, C, C ... C) constituant le segment sélectionné.

**16.** Réseau de distribution de contenu, comprenant une pluralité de noeuds (102, 103) selon l'une quelconque des revendications 10 à 15.

FIG. 1

| $A_1$ | $A_2$ | $A_3$ | $A_4$ | $A_5$ | $B_1$ | $B_2$ | $B_3$ | $B_4$ | $B_5$ | $C_1$ | $C_2$ | $C_3$ | $C_4$ | $C_5$ |

201  202  203

200

FIG. 2

FIG. 3

303

All blocks from
segment n
received?

303a

No

Yes

Increase value of n by 1

303b

Select segment
n

303c

FIG. 3A

FIG. 4

21

```
┌──────────────────────────────────────────────────────┐
│        Check playing position of each neighbour        │
│                                                   501  │
└──────────────────────────────────────────────────────┘
                            │
                            ▼
┌──────────────────────────────────────────────────────┐
│       Select x neighbours based on playing position    │
│                                                   502  │
└──────────────────────────────────────────────────────┘
                            │
                            ▼
┌──────────────────────────────────────────────────────┐
│              Drop selected neighbours                  │
│                                                   503  │
└──────────────────────────────────────────────────────┘
```

FIG. 5

$t_1$    $t_2$    $t_3$    $t_0$    $t_4$    $t_5$        $t_6$

→ Time

$t=0$

↑
Playing
position
of peer
601

602

$t=L$

600

FIG. 6

Determine capacity of connections at peer

701

Is capacity below a threshold?

702

No

Yes

Request peer endpoint information

703

Connect to additional peers

704

FIG. 7

Determine capacity of connections at peer
701

Is capacity below a threshold?
702

No

Yes

Request peer endpoint information
703

Analyse characteristics of the new peers and existing neighbours
801

Switch connections?
802

No

Yes

Drop y existing neighbours and connect to z new neighbours
803

FIG. 8

FIG. 9

Select segment

1001

Encode block from all received
blocks in selected segment

1002

Send encoded block in response to a
request

1003

FIG. 10

```
                                                          ⌐304

  Request block from selected segment from a
                 neighbour
                                            304a

  Receive coefficient vector for encoded block
                                            304b

       No        Is encoded block
      ◄──────       useful?
                      304c
                        │ Yes
                        ▼
  Select the encoded block
                                            304d
```

FIG. 11

**EP 1 826 980 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 05270099 A